# EUROPEAN PATENT SPECIFICATION

(11) **EP 0 733 024 B1**
(45) Date of publication and mention of the grant of the patent: **12.06.2002**
(21) Application number: 94926120.0
(22) Date of filing: 08.09.1994
(51) Int. Cl.: C02F 1/32, C02F 1/78

(54) **REGENERATOR FOR OXIDATION AND CLEANING OF A LIQUID**
REGENERATOR ZUR OXYDATION UND REINIGUNG EINER FLÜSSIGKEIT
REGENERATEUR DESTINE A L'OXYDATION ET A L'EPURATION D'UN LIQUIDE

(30) Priority: 08.09.1993 DK 41293
(43) Date of publication of application: 25.09.1996
(73) Proprietor: Larsen, Bjarne Rudolf Ebbeskov, 5450 Otterup (DK); Danish Bionik Developments, 5450 Otterup (DK)
(72) Inventor: LARSEN, Bjarne Rudolf Ebbeskov, 5450 Otterup (DK)
(74) Representative: Nielsen, Leif
(86) International application number: DK9400335
(87) International publication number: WO9507239

(56) References cited:
- WO-A-90/05011
- WO-A-92/14677
- DE-B- 1 112 465
- US-A- 1 151 267
- PATENT ABSTRACTS OF JAPAN, Vol. 12, No. 56, C-477; & JP,A,62 201 688, (IWASAKI ELECTRIC CO LTD), 5 Sept. 1987.
- PATENT ABSTRACTS OF JAPAN, Vol. 12, No. 373, C-534; & JP,A,63 126 592, (IWASAKI ELECTRIC CO LTD), 30 May 1988.

## Description

The invention relates to a device as described in the introduction to claim 1.

In connection with the oxidation and cleaning of liquids it is well known that ozone can be used (cf. e.g. DE-B-1 112 465).

In connection with liquids that are to be disinfected without consideration for biological processes, something called corona ozone can be used. This type of ozone is mixed with a series of chemical compounds which appear during the production process. The ozone mixture is a powerful disinfectant and, at the same time, a powerful oxidant.

Corona ozone is used, among other things, for the oxidation, disinfection and cleaning of water in swimming pools.

For liquids which require cleaning whilst showing consideration for higher organisms, a cleaner ozone is used, a so-called natural ozone which is produced using UV-light of a given wavelength.

This type of ozone, which, for the most part, is the same as the ozone found in nature, is used, among other things, for oxidation and disinfection in sensitive biological environments as it is less harmful than the first mentioned type.

Common to the aforementioned reactions is that the desired oxidation occurs in liquids where carbon chains with double bonds exist.

Furthermore, it is also well known that it is possible to irradiate a liquid with UV-light and that this causes both a disinfectant effect and achieves improved oxidation since the UV-irradiation improves the ozone's reaction with the liquid.

The disadvantage of this technique is, mainly, that it is not cheap or practically suited to large aqueous environments.

It is an object of the present invention to provide a device overcoming the disadvantages of the prior art techniques.

According to the present invention, this is obtained with a device being characterised in that the reaction vat is fixed at a supporting structure and has a domed bottom, that the reaction vat is upwardly open, and that the rotor is arranged for pressing the liquid against said domed bottom thereby forcing the liquid through a rotating upward movement and up over the edge of the reaction vat in a continuous rotating movement to the surrounding areas.

### Advantages of the Invention

Putting the liquid in a reaction vat and creating a downward rotating movement using a rotor causes the negative pressure over the rotor in the liquid to create a downward pull which is used for the induction of both non-oxidated and uncleaned liquid or gas or a mixture of these, a device is provided which makes it possible to have a practical method by which it is possible to combine the introduction and drainage of a liquid with an effective mixture of ozone and UV-activated air, and thus achieve a hitherto unknown efficiency is partly effective activation during the actual oxidation and disinfection process, and partly an advantageous and suitable introduction and drainage of liquid, as this is done in circular movements which cause less turbulence in the flow of liquid.

With a device according to the present invention, it has shown that the rotating upwardly movement of the liquid makes it possible to treat relatively large amounts of conditioned liquid. The high capacity is based on the fact that the liquid is pressed downward in a rotary movement against the domed bottom and then up over the edge of the vat and out to the surrounding areas.

By using ozone which is produced through UV-irradiation, the so-called natural ozone, a method of conditioning is achieved which can be used on liquids which contain sensitive inferior biological deposits which it is not desirable to break down. Thus, this method can be used to clean lakes, streams and the like.

By irradiating the liquid during the downward rotation of at least one reaction activating UV-light source or ozone promoting UV-light source, or a combination of these, before the liquid is drained off to the surroundings, a further optimisation of the conditioning of the fluid is achieved since this conditioning is thus directly integrated with the resulting pattern of movement.

The device comprises a rotor which is either directly or indirectly connected to a motor by means of power transmission agents. The rotor is placed in or at a distance from the bottom of the reaction vat with the axis of rotation primarily placed perpendicularly on the base of the reaction vat. This device is also mounted with one or gas conduits which lead the conditioned air or ozone in liquid or gas form in the direction of the rotor. The mouth of the conduit is at a distance from the rotor. The rotor causes a spiral movement in the reaction vat, whose axial component is directed towards the bottom of the reaction vat. The axial component is directed downwards towards the bottom of the reaction vat and the conditioned air is mixed with the liquid and sucked down the agitating conduit in the above mentioned spiral or rotating movement. From the agitating conduit the conditioned liquid is led towards the bottom of the reaction vat, along the domed bottom, and up over its edge to the surrounding area.

This means that the above mentioned spiral movement towards the bottom of the vat combines the optimal supply and removal of liquid with an optimal mixing technique.

In tests, measurements have shown that woodland lakes for example, can be oxidated and cleaned using a device according to the invention. The actual oxidation and cleaning is cheap and no chemical additives are used.

The conditioned gas or liquid may consist of ozone gas or liquid produced using UV, a UV-activated gas or liquid or a mixture of these. The UV-produced ozone is produced by irradiating a liquid or a gas in a container with an ozone promoting light source, after which this ozone-containing gas or liquid is led to the conduit. The UV-activated gas or liquid is produced by irradiating a liquid or gas in a container using a UV-light source. The conditioned gas or liquid which is discharged from the conduit can consist of any proportion whatsoever designed for the task in question. This means that the conditioning of the liquid can be adjusted to the desired result since the oxidation itself, and some of the disinfectant effect, steams from the UV-activated ozone. The UV-activated liquid or gas partly produced a disinfectant affect and partly results in the increase of the oxidation as a result of the addition of ozone.

The reaction vat may be provided with one or more UV-light source which irradiate the interior of the reaction vat. Precisely one or a combination of ozone promoting UV-light sources or reaction activating UV-light sources are used, and as a result a very effective conditioning is achieved as the process trail is extended as a result of the spiral formed stream. This means that the conditioning of the liquid can be achieved with very great effect.

By placing one or more UV-light sources which irradiate the area in the area above the reaction vat, whilst precisely one or a combination of ozone producing UV-light sources are used, the liquid is pretreated before being fed into the reaction vat, which further intensifies the desired process.

By placing a flow regulator over the rotor which is height adjustable and secured by a suspension bracket, a design is achieved whereby it is possible to regulate the flow conditions in the reaction vat in a simple way.

By making the flow regulator funnel shaped with the orifice facing downwards, a streamlined regulating mechanism is achieved.

The device may be built into a closed holder with an input and an output which are placed above and below the edge of the reaction vat, respectively, Both the input and output are provided with valves or throttles to control the oxidation and cleaning process, and this results in an appropriate design which is particularly suited to stationary applications. For example, the device could be used to advantage in continuous conditioning is desirable. Furthermore, the control of the output and input flow can be used for a dynamic and possibly automatic control of the conditioning according to previously laid down limits.

The reaction vat may be connected to a generator pipe which faces downwards and which forms a lower discharge from the reaction vat. In the pipe there is a motor driven axle with one or more rotors attached, and the lower mouth of the generator pipe ends at a shaped vortex sheet. In this way, some of the liquid which has been sucked down in the reaction vat is led through the generator pipe, and since the actual discharging from the pipe occurs in a rotating movement, a form of expulsion which optimises the drainage of the conditioned liquid to the surrounding area is achieved. The balance between the upper and lower discharge of the conditioned liquid can be adjusted through the size of the rotor and its speed of rotation.

By providing the underside of the reaction vat with magnets and advantageous polarisation is achieved. This causes, among other things, an increased transformation and thus the secretion of ions, which are converted into atoms in molecular form.

By providing the underside of the reaction vat with a nest of tubes containing a biomagnetic fluid, a simultaneous biological refinement occurs in the deferrization tank.

By using the device for the conditioning of liquids which demand a high degree of purity, in as much as the conditioning ozone used is corona ozone, a particularly effective disinfection of aqueous environments which are not too sensitive to the powerful disinfectant can be achieved. Therefore, this use is advantageous in connection with swimming pools, for example.

By using the device for the conditioning of liquids where particular consideration must be given to biological deposits, a hitherto unknown conditioning of biologically sensitive environments such as lakes, streams, aquariums and the like can be achieved.

### The Drawing

The invention will , in the following, be described more closely with reference to the drawing where
- Fig. 1: shows a cross section of a design according to the invention, and
- Fig. 2: shows a cross section of a further design according to the invention.

### Description of the design example

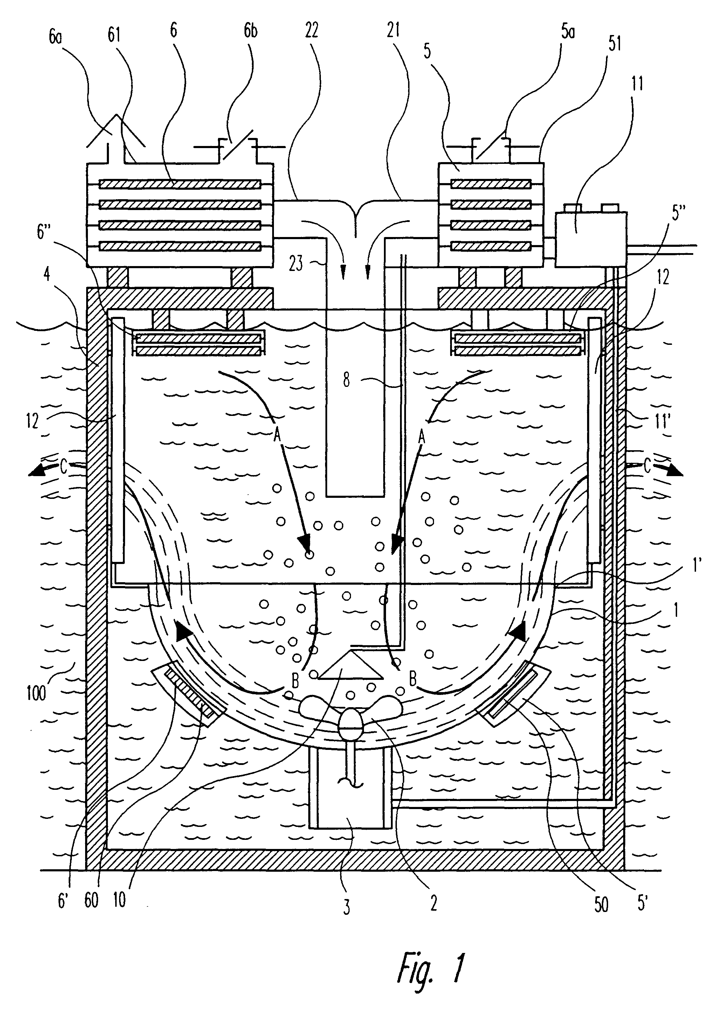

In fig. 1 an example of a preferred design according to the invention is shown.

A reaction vat 1 is placed in a liquid 100 which is to be disinfected and oxidated.

The reaction vat 1 is suspended on hydraulic lifting rods 12, which are in turn fastened to a supporting structure 4. At the bottom of the reaction vat 1 there is a rotor 2 mounted which is driven by a motor 3. Motor 3 is connected to a rotor regulator 11 using connecting agents 11'. On the underside of the reaction vat 1 UV-light sources 5', 6' have been placed, and which through every quartzy glass opening 50,60 irradiate the interior of the reaction vat 1. The UV-light source 6' has a wavelength in the region of 185 nm, and the other UV-light source 5' has a wavelength which has wider spectrum.

Above rotor 2 is placed a flow regulator 10, which is suspended from a mount 8, which in turn is connected to the supporting structure 4 in a way that makes it possible to regulate it.

On the supporting structure there are likewise two containers 61,51, which, via the connecting pipes 21,22, respectively, are connected to a conduit 23, which ends over and at a distance from the rotor 2.

In the container 61 UV-light sources 6 which have a wavelength in the region of 185 nm have been placed. The container has an input 6a for air and an input 6b for liquid.

Similarly, in the container 51 UV-light sources 5 have also been placed, and the container 51 has an air input 5a.

In connection with the supporting construction 4 two further upper sources of light 5", 6'' have been placed, and these irradiate part of the area over the reaction vat 1.

The function of the above device is as follows:

A liquid or gas is conducted to container 61 in which this liquid or gas is subjected to UV-irradiation from UV-light sources 6. The wavelength of the radiation is adjusted so that it reacts with the oxygen which is present and turns this into an ozone, which, on the whole, is the same as the ozone which exists in nature. This ozone is led via the connecting pipe 22 and conduit 23 down towards the rotor 2.

In the same way, a gas or a liquid can be conducted to container 51 where the gas or liquid is irradiated with a more broad spectred UV-radiation. This radiation causes the gas or fluid to achieve disinfectant properties. Furthermore, and this is not the least important characteristic, the UV-radiation increases the ozone's oxidation process in the liquid 100. This gas or liquid is also led via the connecting 21 and conduit 23 down towards the rotor 2.

The liquid or gas which emerges from conduit 23, is called in the following the conditioning gas or liquid, because this gas or liquid, when it is added to the liquid 100, causes a powerful oxidation and disinfection of the liquid 100.

The propulsion of the conditioning gas or liquid can be supplemented using a blower or similar mechanism (not shown).

The rotor 2 creates a rotating partial vacuum as it rotates so that both the liquid 100 and the conditioning gas or liquid are pulled down towards the rotor 2 in a spiral movement in which the gas or liquid is simultaneously mixed and can react with the liquid 100.

The liquid 100 is drawn from the surface towards the rotor 2, as shown by arrow A, in a spiral movement.

In this way, the liquid 100 is drawn past the two UV-light sources 6'', 5" before having the conditioning liquid added to it, and is thus pre-treated.

From the rotor 2 the liquid is pressed against the reaction vat's 1 walls as shown by the arrows marked B, and up over the edge of the reaction vat 1' and out the surrounding areas, as shown by the arrows marked C. The movement is still a rotating one.

During the rotating upward movement B the liquid is once again irradiated by the UV-light sources 6', 5'.

The long road that the individual "liquid parts" takes as a result of the spiral movement means that the conditioning, as shown, can be done particularly intensively on each single "liquid part".

The rotating movement C over the edge of the reaction vat means that it is possible to drain off relatively large amounts of conditioned liquid because this is drained off across the whole surface. The liquid is spread, so to speak, to the surrounding area.

The flow regulator 10 is used to control the downward flow of liquid B, as the axial movement component can be varied by raising and sinking the flow regulator. In this way, it is possible to both control the flow and the amount of conditioning. The flow regulator can be designed in many ways and be moved in a variety of directions and is therefore not limited to the design shown here.

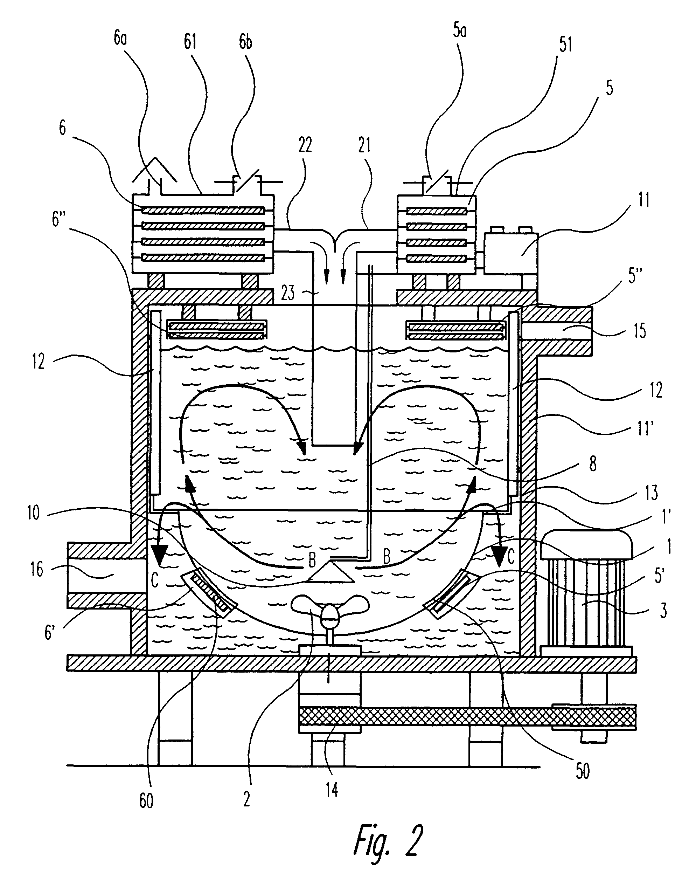

In Fig. 2, a further design according to the invention can be seen.

The device shown is more or less the same as that shown in Fig. 1, in as much as this is built into a container.

The most important parts, which have the same names as those shown in Fig. 1, do not differ very much in their construction and function. They will therefore not be described in more detail.

The construction, as shown in Fig. 1, is built into a container, the inside of which is connected to the surroundings via a liquid input 15 and a liquid output 16.

In this design the rotor is connected to a motor 3 by a V-belt 14.

The liquid input and output can be further supplied with separately controlled throttles or valves (not shown), with which the treatment time for the liquid led into the reaction vat can be regulated manually or automatically.

The function of the designs described here are as follows:

The actual conditioning gas or liquid is produced in the same way as shown in Fig. 1.

The liquid 100 which is to be conditioned, is conducted through input 15.

For as long as the conditioning of the same liquid is considered necessary, the output is closed, and the liquid describes a spiral shaped course B.

When the output 16 is opened, either manually or automatically, some of the liquid will pass into course C, and in the way the reaction vat gradually drains away the conditioning liquid.

The design shown in Fig. 2 is particularly suitable for stationary plants.

In both the designs shown here the different parameters can be regulated. In this way the mixing of the conditioning liquid or gas which is led into conduit 23 can be mixed according to the prevailing conditions. Thus under certain conditions it might be necessary to drain only irradiated liquid or gas via conduit 23 from one of the containers 51 or 61. In normal operations through, it would be a mixture of the two components that would be drained off.

It must also be mentioned that in connection with the cleaning of liquids which do not make particular demands on the protection of inferior biological deposits, it would be an advantage to replace the container 61 with a container which creates the stronger and more active corona or high-tension ozone.

## Claims

1. Device for cleaning a liquid by oxidation and/or disinfecting comprising:
- a reaction vat (1) for containing the liquid (100) to be cleaned,
- a rotor (2) submerged into the liquid, as it is arranged at the bottom of the vat for, during operation, bringing the liquid into a rotating movement A directed towards the bottom of the reaction vat,
- at least one source (5,6) of conditioning fluid for cleaning the liquid (100) in the vat (1), and
- at least one fluid conduit (21-23) extending between the source (5,6) of conditioning fluid and the reaction vat (1), and debouches at a distance over the rotor (2)
**characterised in that**
- the reaction vat (1) is fixed at a supporting structure (4) and has a domed bottom,
- the reaction vat is upwardly open, and
- the rotor (2) is arranged for pressing the liquid against said domed bottom thereby forcing the liquid through a rotating upward movement (B) and up over the edge (1') of the reaction vat (1) in a continuous rotating movement.

2. Device according to claim 1, **characterised in that** the domed bottom of the reaction vat (1) converges into a direction away from the rotor (2).

3. Device according to claim lor 2, **characterised in that** the vat (1) wholly or in part is submerged into a water body such as a lake to be cleaned, and that the vat (1) has an inlet and an outlet, respectively, for the water (100).

4. Device according to claim 1, 2 or 3, **characterised in that** the vat is built into a closed container having an inlet (15) and an outlet (16) both of which are mounted with valves or throttles for controlling the cleaning process.

5. Device according to any one of the claims 1-4, **characterised in that** an adjustable flow regulator (40) is placed over the rotor (2), said regulator being funnel shaped tapering into a direction opposite the downwards movement of the liquid in the vat.

6. Device according to any one of the claims 1-5, **characterised in that** the bottom of the vat (1) has an opening below the rotor and a downwards extending tube, and that the rotor is rotated by means of a driven axle extending through the tube and having at the lower mouth of this a vortex sheet for bringing the liquid into a rotating movement.

7. Device according to any one of the claims 1-6, **characterised in that** the source of conditioning fluid comprises an ozone-producing UV-light source (5,6) in a container (51,61) for providing UV-produced ozone by irradiation the fluid.

8. Device according to any one of the claims 1-6, **characterised in that** the source of conditioning fluid comprises a high voltage corona source in a container (51,61) for providing ozone-activated gas/air.

9. Device according to any one of the claims 1-6, **characterised in that** the source of conditioning fluid comprises an ozone-producing UV-light source (5,6) in a container for providing UV-activated fluid (51,61) by irradiation the fluid.

10. Device according to any one of the claims 1-6, **characterised in that** the source of conditioning fluid comprises one or more UV-light sources (5',6') provided in the reaction vat (1) for irradiation the liquid in the reaction vat (1).

## Patentansprüche

1. Gerät zur Reinigung einer Flüssigkeit durch Oxidation und/oder Desinfektion einschließlich:
- eines Reaktionsbehälters (1), der die zu reinigende Flüssigkeit (100) enthalten soll,
- eines Rotors (2), in die Flüssigkeit abgetaucht, indem er auf dem Boden des Behälters angeordnet ist, um im Betrieb die Flüssigkeit zu einer rotierenden Bewegung (A) zu bringen, die gegen den Boden des Reaktionsbehälters gerichtet ist,
- mindestens einer Quelle (5, 6) von Konditioneriungsflüssigkeit für die Reinigung der Flüssigkeit (100) im Behälter, und
- mindestens einer Öffnung der Flüssigkeit (21-23), die sich zwischen der Quelle (5,6) der Konditionierungsflüssigkeit und dem Reaktionsbehälter (1) verlängert, und die einen Abstand über den Rotor (2) ausmündet,
**dadurch gekennzeichnet, dass**
- der Reaktionsbehälter (1) an einer unterstützenden Struktur (4) befestigt ist und einen kuppelförmigen Boden hat,
- der Reaktionsbehälter aufwärts offen ist, und
- der Rotor (2) dazu angeordnet ist, die Flüssigkeit gegen den erwähnten kuppelförmigen Boden zu pressen, und dabei die Flüssigkeit durch eine aufwärts gerichtete rotierende Bewegung (B) und aufwärts über die Kante (1') des Reaktionsbehälters (1) zu einer kontinuierlich rotierenden Bewegung zu zwängen.

2. Gerät nach Anspruch 1, **dadurch gekennzeichnet, dass** der kuppelförmige Boden des Reaktionsbehälters (1) in einer Richtung weg vom Rotor (2) konvergiert.

3. Gerät nach Anpruch 1 oder 2, **dadurch gekennzeichnet, dass** der Reaktionsbehälter (1), als Ganze oder in Teilen in ein Wasserkörper abgetaucht wird, so wie einen See, der gereinigt werden soll, und dass der Behälter (1) bzw. eine Zuführungsöffnung und eine Abgabeöffnung für das Wasser (100) hat.

4. Gerät nach Anspruch 1,2 oder 3, **dadurch gekennzeichnet, dass** der Behälter in einen geschlossenen Behälter eingebaut ist, der eine Zuführungsöffnung (15) und eine Abgabeöffnung (16) hat, die beide mit Ventilen oder Ventilklappen montiert sind, um das Reinigungsverfahren zu kontrollieren.

5. Gerät nach jedem der Ansprüche 1-4, **dadurch gekennzeichnet, dass** ein regelbarer Strömungsregler (40) über den Rotor (2) angebracht ist, der erwähnte Regler, der trichtenförmig ist, der in einer Richtung in eine Spitze verläuft, der der nach unten gerichtenden Bewegung der Flüssigkeit im Behälter entgegengesetz ist.

6. Gerät nach jedem der Ansprüche 1-5, **dadurch gekennzeichnet, dass** der Boden des Behälters (1) eine Öffnung unter dem Rotor und unter dem nach unten gerichteten Rohr hat, und dass der Rotor durch eine Antriebswelle, die sich durch das Rohr verlängert, und das an seiner niedrigen Mündung eine Wirbelfläche hat, um eine rotierende Bewegung in der Flüssigkeit zu bewirken.

7. Gerät nach jedem der Ansprüche 1-6, **dadurch gekennzeichnet, dass** die Quelle der Konditionierungsflüssigkeit eine Ozon-erzeugende UV-Lichtquelle (5, 6) in einem Behälter (51, 61) einschließt, um UV-erzeugten Ozon durch Bestrahlung der Flüssigkeit zu besorgen.

8. Gerät nach jedem der Ansprüche 1-6, **dadurch gekennzeichnet, dass** die Quelle der Konditionierungsflüssigkeit eine hochgespannte Quelle der Korona in einem Behälter (51, 61) einschließt, um Ozon-aktiviertes Gas und/oder Ozonaktivierte Luft zu besorgen.

9. Gerät nach jedem der Ansprüche 1-6, **dadurch gekennzeichnet, dass** die Quelle der Konditionierungsflüssigkeit eine Ozon-erzeugende UV-Lichquelle (5, 6) in einem Behälter einschließt, um UV-aktivierte Flüssigkeit (51, 61) durch Bestrahlung der Flüssigkeit zu besorgen.

10. Gerät nach jedem der Ansprüche 1-6, **dadurch gekennzeichnet, dass** die Quelle der Konditionierungsflüssigkeit eine oder mehrere UV-Lichtquellen (5', 6') einschließt, im Reaktionsbehälter (1) besorgt, um die Flüssigkeit im Reaktionsbehälter (1) zu bestrahlen.

## Revendications

1. Dispositif d'épuration d'un liquide par l'oxydation et/ou de désinfection comprenant:
- une cuve de réaction (1) contenant le liquide (100) à épurer,
- un roteur (2) submergé dans le liquide étant donné qu'il est disposé dans le fond de la cuve pour mettre le liquide, lors de l'opération, dans un mouvement de rotation A dirigé vers le fond de la cuve de réaction,
- au moins une source (5,6) de liquide de conditionnement pour l'épuration du liquide (100) dans la cuve (1), et
- au moins une conduite de liquide (21-23) s'étendant entre la source (5,6) de liquide de conditionnement et la cuve de réaction (1) et débouche à une distance au-dessus du roteur (2)
**caractérisé en ce que**
- la cuve de réaction (1) est fixée à une structure de support (4) et présente un fond bombé,
- la cuve de réaction est ouverte vers le haut, et
- le roteur (2) est arrangé pour presser le liquide contre ledit fond bombé ainsi forçant le liquide à travers un mouvement de rotation (B) vers le haut et au-dessus du bord (1') de la cuve de réaction (1) dans un mouvement de rotation continu.

2. Dispositif selon la revendication 1, **caractérisé en ce que** le fond bombé de la cuve de réaction (1) converge dans une direction opposée au roteur (2).

3. Dispositif selon la revendication 1 ou 2, **caractérisé en ce que** la cuve (1) toute entière ou partiellement est submergée dans un corps d'eau comme par exemple un lac à épurer et que la cuve (1) présente une entrée respectivement une sortie d'eau (100).

4. Dispositif selon la revendication 1, 2 ou 3, **caractérisé en ce que** la cuve est construite dans un récipient fermé ayant une entrée (15) et une sortie (16) dont les deux sont montées de valves ou de valves à papillon pour le contrôle du procédé d'épuration.

5. Dispositif selon l'une quelconque des revendications 1-4, **caractérisé en ce qu**'un régulateur de débit réglable (40) est monté au-dessus du roteur (2), ledit régulateur étant en forme d'entonnoir pointu dans une direction opposée du mouvement vers le bas du liquide de la cuve.

6. Dispositif selon l'une quelconque des revendications 1-5 **caractérisé en ce que** le fond de la cuve (1) a une ouverture sous le roteur et une tube s'étendant vers le bas, et que le roteur est mis en rotation au moyen d'un arbre traîné s'étendant à travers la tube et présente à la bouche inférieure de celle-ci une feuille de tourbillon pour mettre le liquide dans un mouvement de rotation.

7. Dispositif selon l'une quelconque des revendications 1-6, **caractérisé en ce que** la source de liquide de conditionnement comprend une source d'éclairage UV de production d'ozone (5,6) dans un récipient (51,61) pour prévoir de l'ozone produite d'UV par irradiation du liquide.

8. Dispositif selon l'une quelconque des revendications 1-6, **caractérisé en ce que** la source de liquide de condionnement comprend une source de couronne de haute tension dans un récipient pour prévoir du gaz/de l'air activé d'ozone.

9. Dispositif selon l'une quelconque des revendications 1-6, **caractérisé en ce que** la source du liquide de conditionnement comprend une source d'éclairage UV de production d'ozone (5,6) dans un récipient pour prévoir du liquide activé d'UV (51,61) par irradiation du liquide.

10. Dispositif selon l'une quelconque des revendications 1-6, **caractérisé en ce que** la source du liquide de conditionnement comprend une ou plusieurs sources d'éclairage UV (5',6') prévues dans la cuve de réaction (1) pour irradiation du liquide dans la cuve de réaction (1).
